# EUROPÄISCHE PATENTSCHRIFT

(11) **EP 1 663 504 B1**
(45) Veröffentlichungstag und Bekanntmachung des Hinweises auf die Patenterteilung: **15.08.2007**
(21) Anmeldenummer: 05774427.8
(22) Anmeldetag: 13.08.2005
(51) Int. Cl.: B05B 7/04, B05B 1/30, B08B 3/02

(54) **REINIGUNGSLANZE**
CLEANING LANCE
LANCE DE NETTOYAGE

(30) Priorität: 13.09.2004 DE 202004014341 U
(43) Veröffentlichungstag der Anmeldung: 07.06.2006
(73) Patentinhaber: WashTec Holding GmbH, 86153 Augsburg (DE)
(72) Erfinder: WILFERT, Marcus, 86420 Diedorf (DE)
(74) Vertreter: Gehrsitz, Stefan
(86) Internationale Anmeldenummer: PCT/EP2005/008833
(87) Internationale Veröffentlichungsnummer: WO 2006/029680

(56) Entgegenhaltungen:
- EP-A- 0 146 795
- EP-A- 0 638 366
- EP-A- 0 901 830
- DE-B3- 10 257 783

## Beschreibung

Die Erfindung betrifft eine Reinigungslanze nach dem Oberbegriff des Anspruchs 1.

Derartige Reinigungslanzen werden üblicherweise bei SB-Fahrzeugwaschanlagen eingesetzt. Bei solchen SB-Waschanlagen erfolgt zunächst ein Schaumauftrag auf das Fahrzeug mittels einer Schaumbürste und anschließend erfolgt die eigentliche Wäsche des Fahrzeugs mit einer Waschflüssigkeit, welche mit einer Hochdrucklanze unter hohem Druck auf das Fahrzeug gesprüht wird. Dieser Waschablauf bedingt, dass an den SB-Waschanlagen häufig zwei verschiedene Lanzen, nämlich eine Lanze für den Schaumauftrag und eine Hochdrucklanze für den Auftrag der Waschflüssigkeit unter hohem Druck, zur Verfügung stehen. Die beiden Lanzen werden jeweils über separate Zuführleitungen und separate Deckenkreisel mit Schaum bzw. Waschflüssigkeit versorgt. Die Handhabung ist deshalb schwierig und umständlich. Insbesondere stören sich die Zufuhrschläuche für den Schaum und die Waschflüssigkeit für die beiden Lanzen und es kann zu Verwicklungen der Zufuhrschläuche kommen.

Um dies zu vermeiden, wurden bereits Reinigungslanzen vorgeschlagen, welche mit zwei Düsen, nämlich einer Schaumdüse und einer Hochdruckdüse, ausgestattet sind, um dadurch mit einer einzigen Lanze sowohl den Schaumauftrag als auch die Hochdruckwäsche durchführen zu können. Da für die Hochdruckwäsche und den Schaumauftrag unterschiedliche Düsenformen und -geometrien notwendig sind, ist für die Umsetzung der gewünschten Doppelfunktion erforderlich, dass die Reinigungslanze zwischen zwei Stellungen umschaltbar ist, nämlich einer ersten Stellung für den Schaumauftrag und einer zweiten Stellung für die Hochdruckwäsche. Aus dem Stand der Technik sind hierfür Reinigungslanzen mit umschaltbaren Düsenanordnungen bekannt, mit denen sowohl der Schaumauftrag als auch die Hochdruckwäsche erfolgen kann. Solche Düsenanordnungen für Reinigungsgeräte, welche zwischen einer Hochdruck- und einer Niederdruckstellung umschaltbar sind, sind beispielsweise aus der DE 102 57 783 B3 und der EP 0 146 795 B1 bekannt.

Bei den bekannten Düsenanordnungen erweist es sich als nachteilig, dass manuell eine Umschaltung von der Niederdruck- in die Hochdruckstellung erfolgen muss. Dies liegt einerseits daran, dass die Düsenanordnungen nicht selbsttätig von einer in die andere Stellung umschalten können und dass andererseits auch gewährleistet sein muss, dass in der Niederdruckstellung, in welcher der Schaumauftrag erfolgen soll, eine Luftzufuhr in die Reinigungslanze gewährleistet sein sollte, um einen Reinigungsschaum zu erzeugen.

Der Erfindung liegt daher die Aufgabe zu Grunde, eine Reinigungslanze bereitzustellen, mit der sowohl ein Schaumauftrag als auch eine Hochdruckwäsche durchführbar ist, ohne dass an der Reinigungslanze selbst eine manuelle Umschaltung der Betriebsfunktion der Reinigungslanze erforderlich wäre. Weiterhin soll die Reinigungslanze eine effektive Schaumbildung innerhalb des Strahlrohrs gewährleisten.

Gelöst wird diese Aufgabe mit einer Reinigungslanze mit den Merkmalen des Anspruchs 1. Bevorzugte Ausführungsbeispiele dieser Reinigungslanze sind in den Unteransprüchen angegeben.

Nach der Erfindung wird die genannte Aufgabe bei einer gattungsgemäßen Reinigungslanze dadurch gelöst, dass am Strahlrohr ein Lufteinlass vorgesehen ist, der im Abstand zur Strahldüse angeordnet und mit einem Ventil verschließbar ist, wobei die Ventilfunktion so an dem Umschaltmechanismus der Strahldüse gekoppelt ist, dass das Ventil den Lufteinlass verschließt, sobald die Strahldüse von ihrer Niederdruckstellung in ihre Hochdruckstellung umschaltet. Die Anordnung des Lufteinlasses im Abstand zur Strahldüse, welche am auslassseitigen Ende des Strahlrohrs angeordnet ist, ermöglicht eine durch Mischung der durch den Lufteinlass einströmenden Luft mit der Reinigungsflüssigkeit im Bereich der zwischen dem Lufteinlass und der Strahldüse ausgebildeten Reaktions- und Mischstrecke im innern des Strahlrohrs. Durch die Ausbildung dieser Reaktions- und Mischstrecke wird eine effektive Schaumerzeugung gewährleistet.

In einem bevorzugten Ausführungsbeispiel ist an dem einlassseitigen Ende des Strahlrohrs eine Venturidüse angeordnet, über welche eine Druckdifferenz des in das Strahlrohr einströmenden Fluids herrscht, wenn sich die Strahldüse in ihrer Niederdruckstellung befindet. Dadurch wird im innern des Strahlrohrs eine beschleunigte Strömung der einströmenden Waschflüssigkeit erzeugt. Dies wiederum begünstigt die Durchmischung der durch den Lufteinlass eintretenden Luft mit der Waschflüssigkeit. Die Anordnung der Venturidüse und des im Bereich der Venturidüse angeordneten Lufteinlasses im Abstand zur Strahldüse, in der der Umschaltmechanismus zum Umschalten der Reinigungslanze zwischen einer Hochdruckstellung und einer Niederdruckstellung angeordnet ist, verhindert hierbei, dass die Umschaltung der Strahldüse zwischen Hochdruck- und Niederdruckstellung durch die einströmende Luft behindert oder beeinflusst würde.

Nachfolgend wird die Erfindung unter Bezugnahme auf die begleitenden Zeichnungen anhand eines Ausführungsbeispiels näher erläutert. Die Zeichnungen zeigen:
- **Figur 1:**: Perspektivische Darstellung einer Reinigungslanze mit einem Strahlrohr, einer Strahldüse und einem mit einem Ventil verschließbaren Lufteinlass;
- **Figur 2:**: Seitenansicht der Reinigungslanze von Figur 1, wobei das Strahlrohr verkürzt dargestellt und die Strahldüse sowie der Lufteinlass mit dem Ventil im Aufriss gezeigt sind;
- **Figur 3:**: Darstellung der Einzelheit "A" von Figur 2;
- **Figur 4:**: Darstellung der Einzelheit "B" von Figur 2;
- **Figur 5:**: Darstellung der Reinigungslanze von Figur 2, in einer Ansicht von unten;
- **Figur 6:**: Schnittdarstellung entlang der Linie C-C von Figur 5;
- **Figur 7:**: Schnittdarstellung entlang der Linie D-D von Figur 5;
- **Figur 8:**: Perspektivische Darstellungen der Strahldüse in ihrer Hochdruckstellung, teilweise im Aufriss, aus zwei unterschiedlichen Perspektiven;
- **Figur 9:**: Forderansicht der Strahldüse von Figur 8 (Figur 9a) und Schnittdarstellung entlang der Linie A-A von Figur 9a) und 9b);
- **Figur 10:**: Seitenansicht der Strahldüse (Figur 10a) und Schnittdarstellung entlang der Linie B-B von Figur 10a (Figur 10b);
- **Figur 11:**: Perspektivische Darstellungen der Strahldüse in ihrer Niederdruckstellung, teilweise im Aufriss, aus zwei unterschiedlichen Perspektiven;
- **Figur 12:**: Forderansicht der Strahldüse von Figur 11 (Figur 12a) und Schnittdarstellung entlang der Linie A-A von Figur 12a) und 12b);
- **Figur 13:**: Seitenansicht der Strahldüse (Figur 13a) und Schnittdarstellung entlang der Linie B-B von Figur 13a (Figur 13b).

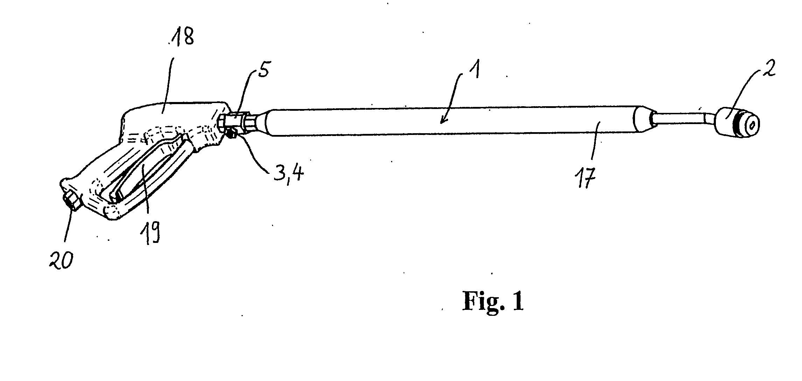

In der Figur 1 ist eine perspektivische Darstellung einer Reinigungslanze gezeigt. Diese umfasst ein Strahlrohr 1, welches im mittleren Bereich von einem Griffschaft 17 umgeben ist und an dessen auslassseitigem Ende eine Strahldüse 2 angeordnet ist. Am einlassseitigem Ende des Strahlrohrs 1 ist eine Drosseldüse in Form einer Venturidüse 5 angeordnet. Im Bereich der Venturidüse 5 weist das Strahlrohr 1 auf seiner Außenseite einen Lufteinlass 3 auf, der mit einem Ventil 4 verschließbar ist. Am einlassseitigen Ende der Venturidüse 5 ist ein Handgriff 18 mit einem Abzug 19 befestigt. An der Unterseite des Handgriffs 18 ist ein Anschlussstutzen 20 zum Anschluss einer hier nicht dargestellten Versorgungsleitung vorgesehen. Die Versorgungsleitung wird von einem hier nicht dargestellten Hochdruckgerät mit Waschflüssigkeit versorgt. An dem Hochdruckgerät ist ein Umschaltknopf vorgesehen, mit dem von Schaumstellung auf Hochdruckstellung umgestellt werden kann. In der Schaumstellung versorgt das Hochdruckgerät die Reinigungslanze mit einer Flüssigkeit, welche mit einem Schaumbildner versetzt ist. In der Hochdruckstellung wird die Reinigungslanze mit unter Hochdruck stehender Waschflüssigkeit versorgt.

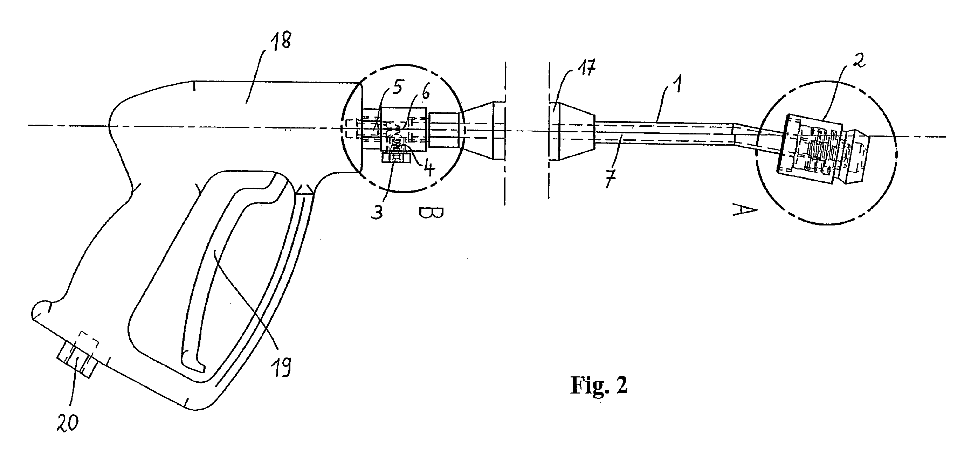

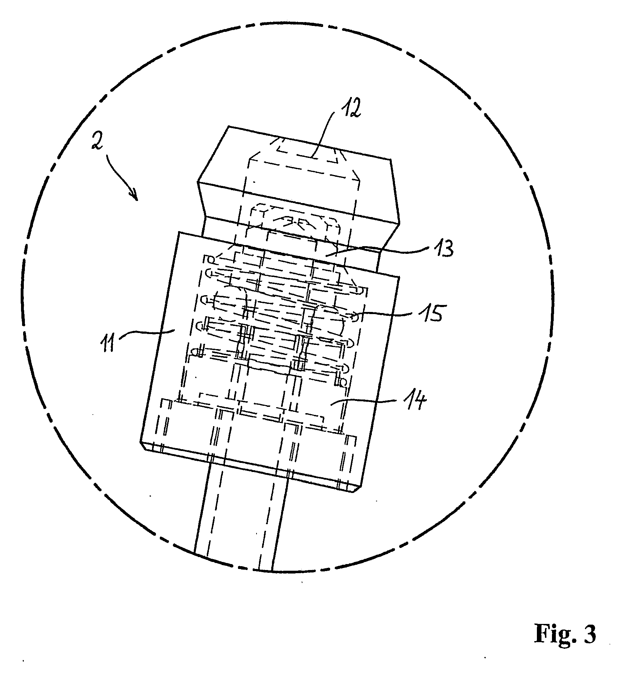

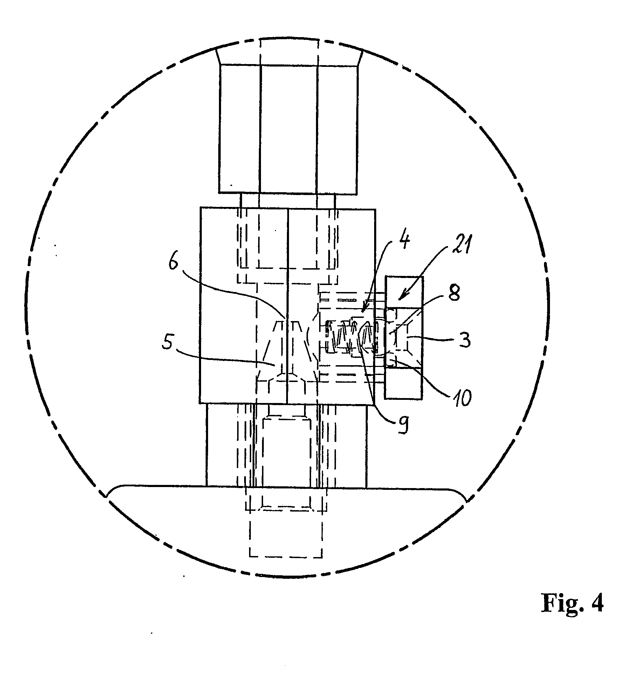

In der Figur 2 ist die Reinigungslanze in einer Seitenansicht mit verkürzt dargestelltem Strahlrohr 1 und teilweise in Aufriss dargestellt. Aus dieser Darstellung ist erkennbar, dass das Strahlrohr 1 einen Strahlkanal 7 begrenzt. Weiterhin ist die Anordnung der als Venturidüse 5 ausgebildeten Drosseldüse am einlassseitigen Ende des Strahlrohrs sowie des von dem Ventil 4 verschließbaren Lufteinlass 3 erkennbar. Das auslassseitige Ende des Strahlrohrs 1 mit der dort aufgesetzten Strahldüse 2 (in Figur 2 mit Einzelheit A gekennzeichnet) ist in Figur 3 vergrößert dargestellt und das einlassseitige Ende des Strahlrohrs 1 mit der Venturidüse 5, dem Lufteinlass 3 und dem Ventil 4 (in Figur 2 mit Einzelheit B gekennzeichnet) ist in Figur 4 vergrößert dargestellt.

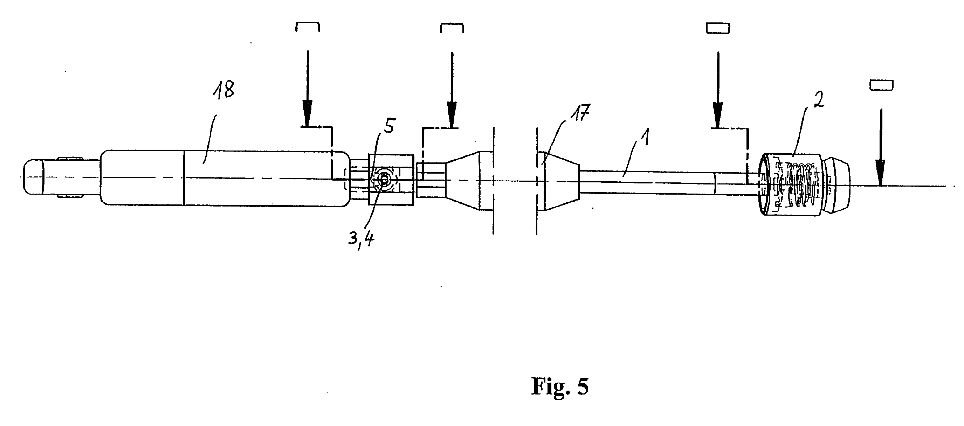

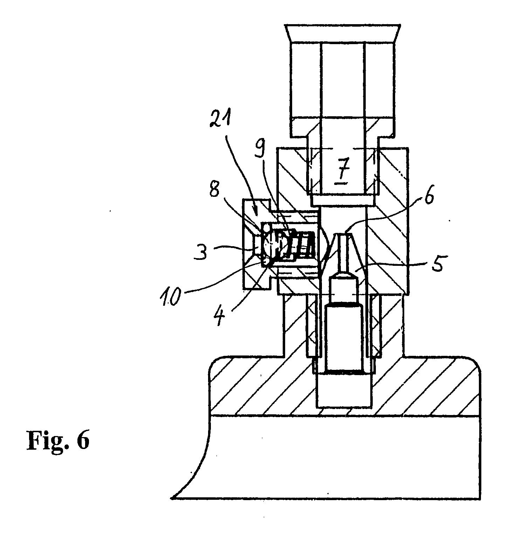

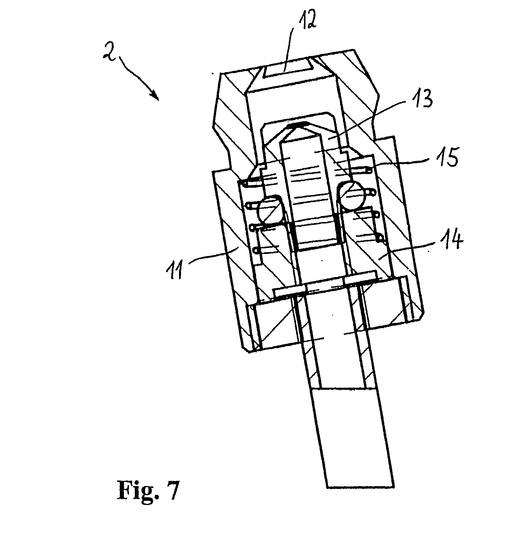

Figur 5 zeigt eine Ansicht der Reinigungslanze, wie sie in Figur 2 dargestellt ist, von unten und in den Figuren 6 und 7 sind Schnittdarstellungen durch das einlassseitige Ende des Strahlrohrs entlang der Linie C-C von Figur 5 bzw. durch das auslassseitige Ende des Strahlrohrs 1 entlang der Linie D-D von Figur 5 gezeigt.

Aus den Darstellungen der Figuren 4 und 6 ist der Aufbau und die Anordnung der Venturidüse 5, des Lufteinlasses 3 und des Ventils 4 am einlassseitigen Ende des Strahlrohrs 1 erkennbar. Bei der Venturidüse 5, welche stirnseitig in den Strahlkanal 7 am einlassseitigen Ende des Strahlrohrs 1 eingesetzt ist, handelt es sich um eine Drosseldüse, welche den Strahlquerschnitt des in den Strahlkanal 7 einströmenden Fluids (Waschflüssigkeit) verengt und dadurch im Bereich des Auslasses 6 der Venturidüse 5 zu einer Erhöhung der Strahlgeschwindigkeit führt. Im Bereich des Auslasses 6 der Venturidüse ist im Zylindermantel des Strahlrohrs 1 ein Einsatz 21 eingefügt. Dieser topfförmige Einsatz 21 weist in seinem Topfboden eine den Lufteinlass 3 bildende Öffnung auf. Diese Öffnung ist in der in Figur 6 gezeigten Stellung durch das Ventil 4 verschlossen. Das Ventil 4 weist hierfür einen als Kugel ausgebildeten Verschlusskörper 8 auf, der durch die Rückstellkraft einer Feder 9 gegen eine Dichtung 10, welche den Lufteinlass 3 im Topfinneren des Einsatzes 21 umgibt, gepresst wird. Bei einer gegen die Rückstellkraft der Feder 9 wirkenden Kraft wird der Verschlusskörper 8 in Richtung der Achse des Strahlkanals 7 gezogen, wodurch sich der Lufteinlass 3 öffnet und einen Lufteinlasskanal in den Strahlkanal 7 freigibt.

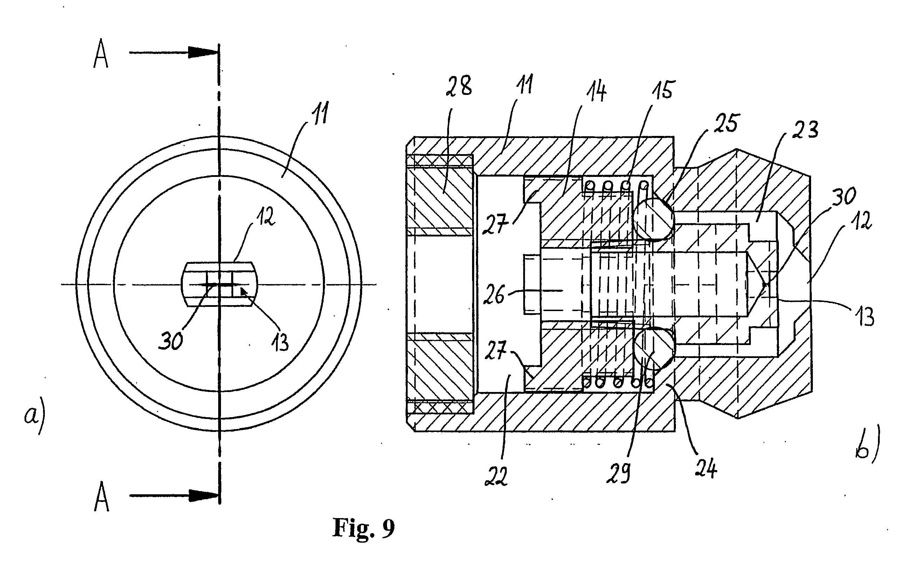

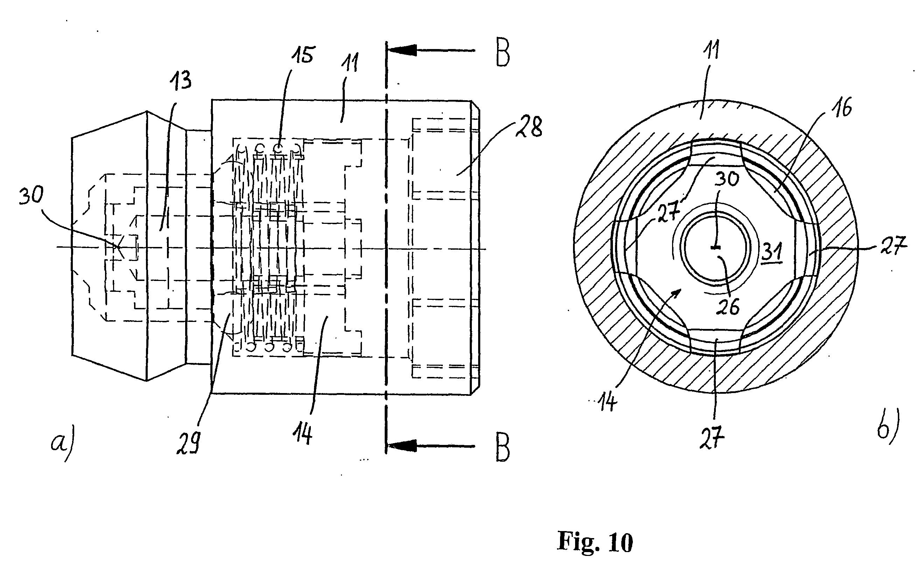

Die am auslassseitigen Ende des Strahlrohrs 1 angeordnete Strahldüse 2 ist zwischen zwei Stellungen, nämlich einer Niederdruckstellung zum Auftragen von Schaum und einer Hochdruckstellung zur Hochdruckreinigung des Fahrzeugs umschaltbar. Zum Umschalten der Strahldüse 2 ist ein Umschaltmechanismus vorgesehen. Es kann sich hierbei um einen manuell zu betätigenden oder um einen automatischen Umschaltmechanismus handeln. Bevorzugt wird ein automatischer Umschaltmechanismus verwendet, wie er nachfolgend anhand des Ausführungsbeispiels der Strahldüse 2, wie sie in den Figuren 7 bis 13 dargestellt ist, erläutert wird.

Die beschriebene Ventilfunktion des Ventils 4 zum Öffnen und Verschließen des Lufteinlasses 3 ist mit dem Umschaltmechanismus der Strahldüse 2 derart gekoppelt, dass das Ventil 4 den Lufteinlass 3 verschließt, wenn die Strahldüse 2 von ihrer Niederdruckstellung in ihre Hochdruckstellung umschaltet, und dass das Ventil 4 den Lufteinlass 3 freigibt, wenn die Strahldüse 2 in ihrer Niederdruckstellung steht. In der Niederdruckstellung fließt mit einem Schaumbildner versetzte Flüssigkeit unter vergleichsweise niedrigem Druck in den Strahlkanal 7 ein. Aufgrund des in der Niederdruckstellung geöffneten Lufteinlasses 3 strömt gleichzeitig Luft in den Strahlkanal 7 und vermischt sich dort mit der schaumbildenden Flüssigkeit, wodurch entlang der Strecke des Strahlkanals 7 Schaum gebildet wird, welcher schließlich in die Strahldüse 2 einströmt. Wird die Strahldüse 2 von ihrer Niederdruckstellung in ihre Hochdruckstellung umgeschaltet, schließt das Ventil den Lufteinlass 3 selbsttätig, als ohne dass das Ventil 4 manuell betätigt werden müsste.

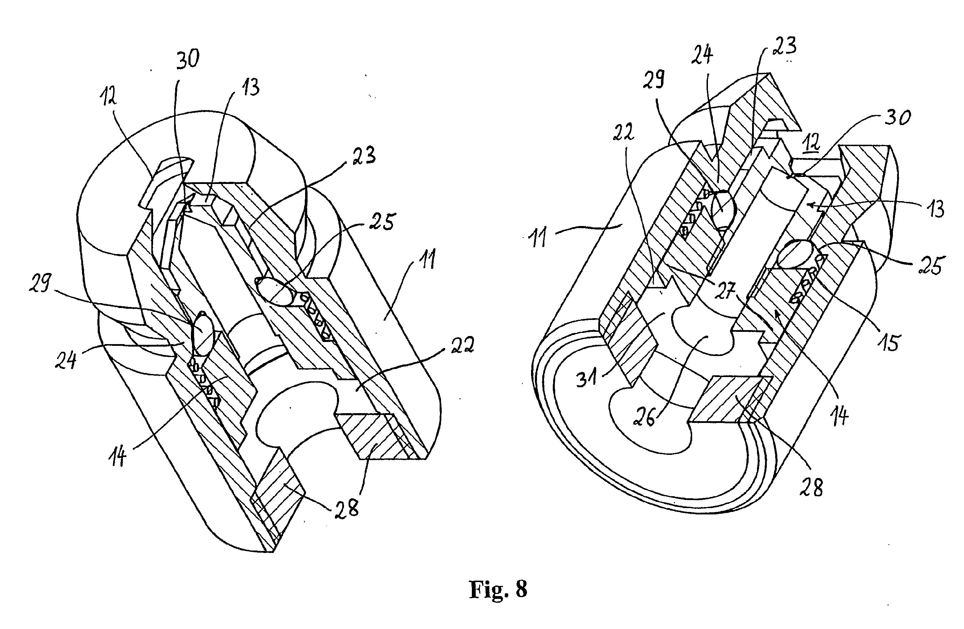

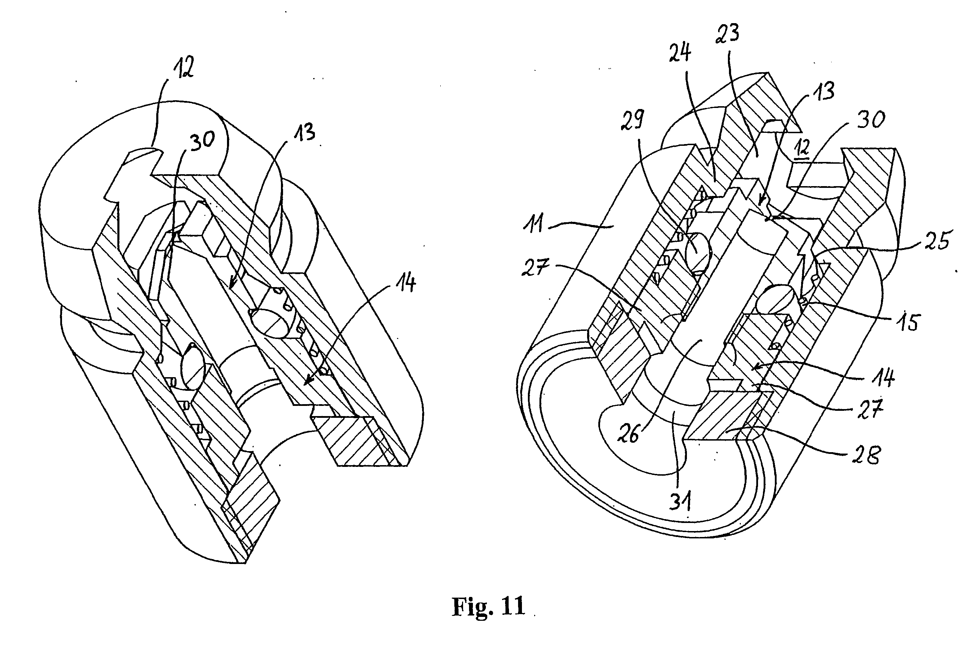

Der Umschaltmechanismus zum Umschalten der Strahldüse 2 von ihrer Niederdruckstellung in ihre Hochdruckstellung (und umgekehrt) ist in den Figuren 8-13 zeichnerisch dargestellt. Die dort gezeigte Strahldüse 2 umfasst ein hohlzylindrisches Düsengehäuse 11 mit einer an der Stirnseite des Düsengehäuse 11 angeordneten großen Düsenaustrittsöffnung 12. Das Düsengehäuse 11 weist einen hinteren Bereich 22 mit größerem Innendurchmesser und einen vorderen Bereich 23 mit kleinerem Innendurchmesser auf. Die Bereiche 22 und 23 sind durch eine Schulter 24 voneinander getrennt, an der eine abgeschrägte Dichtfläche 25 ausgebildet ist. Im hinteren Bereich 22 ist in dem Düsengehäuse 11 ein in Strömungsrichtung (Längsrichtung des Strahlkanals 7) verschiebbarer Kolben 14 angeordnet. Der Kolben 14 weist eine zentrale Bohrung 26 auf. An der Außenseite des Kolbens 14 sind im hinteren Bereich über den Umfang verteilt vier Gleitflügel 27 angeformt. Die Außenflächen dieser Gleitflügel 27 liegen an der Innenfläche des hinteren Bereichs 22 des Düsengehäuses 11 an und ermöglichen ein Gleiten des Kolbens 14 in dem Düsengehäuse 11. An seiner Vorderseite greift ein Rückstellelement 15, welches hier als Feder ausgebildet ist, an. Die Feder 15 stützt sich an der Schulter 24 ab und drückt den Kolben 14 in seine hintere Stellung, welche in den Figuren 11-13 gezeigt ist. In dieser Stellung, welche nachfolgend als Niederdruckstellung bezeichnet wird, stößt die hintere Stirnseite des Kolbens 14 an dem Ende 28 des Strahlrohrs 1 an, welches in das hintere Ende des Düsengehäuses 11 eingeschraubt ist.

An der vorderen Stirnseite des Kolbens 14 ist ein Dichtring 29 angeordnet. In seiner vorderen Stellung, welche nachfolgend als Hochdruckstellung bezeichnet wird und in den Figuren 8 - 10 dargestellt ist, drückt der Kolben 14 den Dichtring 29 gegen die Dichtfläche 25 und dichtet auf diese Weise den hinteren Bereich 22 vom vorderen Bereich 23 im Düsengehäuse 11 ab.

In dem vorderen Bereich 23 ist in dem Düsengehäuse 11 eine Hochdruckdüse 13 angeordnet. Die Hochdruckdüse 13 ist in das vordere Endes des Kolbens 14 eingeschraubt. Die Hochdruckdüse weist an ihrem auslassseitigen Ende einen schmalen Düsenspalt 30 auf. Der schmale Düsenspalt 30 steht über die Bohrung 26 mit dem Strahlkanal 7 in Verbindung.

Der Umschaltmechanismus zum automatischen Umschalten der Strahldüse 2 von ihrer Niederdruckstellung in die Hochdruckstellung funktioniert wie folgt:

In der Ruhestellung als bei abgestellter Flüssigkeitszufuhr, drückt das Rückstellelement 15 den Kolben 14 in seine Niederdruckstellung (Figuren 11 bis 13). Wird nun das Hochdruckgerät auf Schaumstellung eingestellt, fördert dieses Schaum durch den Strahlkanal 7 unter niedrigem Druck in die Strahldüse 2. Der von dem Schaum auf die Rückseite 31 des Kolbens 14 ausgeübte Druck reicht nicht aus, um den Kolben 14 gegen die Rückstellkraft des Rückstellelements 15 nach vorne in die Hochdruckstellung zu verschieben. Der Kolben 14 bleibt deshalb in der in den Figuren 11-13 dargestellten Niederdruckstellung. In dieser kann der Schaum einerseits durch die zentrale Bohrung 26 und den schmalen Düsenspalt 30 und andererseits durch einen zwischen der Außenseite des Kolbens 14 und der Innenfläche des Düsengehäuses 11 gebildeten Ringkanal 16 zur Düsenaustrittsöffnung 12 strömen.

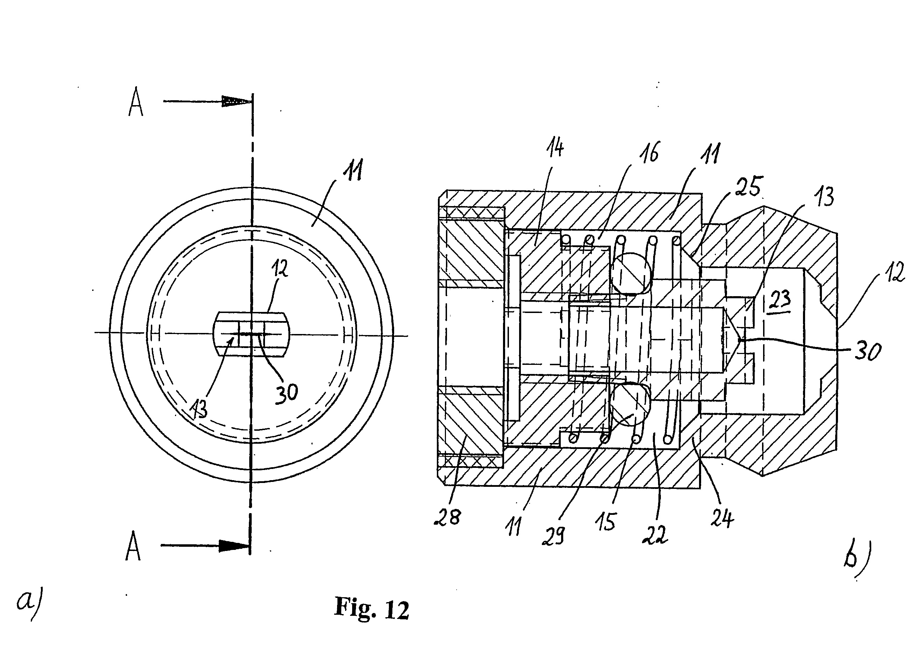

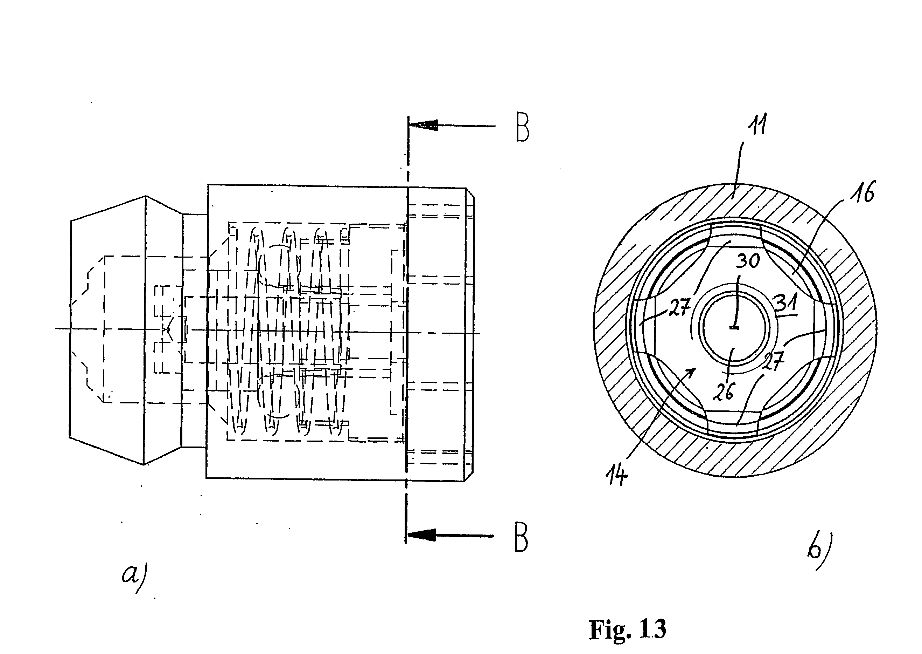

Der in der Niederdruckstellung freie Ringkanal 16, durch den der Schaum vom hinteren Bereich 22 in den vorderen Bereich 23 der Strahldüse 2 fließen kann, ist insbesondere in den Figuren 12 und 13 gezeigt. Der Ringkanal 16 weist einen gegenüber dem schmalen Düsenspalt 20 der Hochdruckdüse 13 großen Strömungsquerschnitt auf und ermöglicht dadurch ein ungehindertes Durchströmen des Schaums durch die Strahldüse 2 zur Düsenaustrittsöffnung 12.

Wird nun nach Beendigung des Schaumauftrags an dem Hochdruckgerät von Schaumstellung auf Hochdruckwäsche umgeschaltet, fließt Waschflüssigkeit unter Hochdruck in den Strahlkanal 7 und in die Strahldüse 2. Der hohe Druck der Waschflüssigkeit drückt auf das hintere stirnseitige Ende 31 des Kolbens 14 und drückt diesen entgegen der Rückstellkraft des Rückstellelements 15 nach vorne in die Hochdruckstellung. In dieser presst der Kolben 14 den Dichtring 29 gegen die Dichtfläche 25 und dichtet so den Durchgang zwischen dem hinteren Bereich 22 und dem vorderen Bereich 23 im Düsengehäuse 11 ab. Der Ringkanal 16 wird auf diese Weise geschlossen und die Waschflüssigkeit kann nur durch die zentrale Bohrung 26 in die Hochdruckdüse 13 und schließlich durch den schmalen Düsenspalt 30 ausströmen. Dies gewährleistet, dass der Hochdruckstrahl möglichst unter hohem Druck aus der Strahldüse 2 ausströmt. Die Umschaltung der Strahldüse 2 von ihrer Niederdruck- in ihre Hochdruckstellung erfolgt zwangsgesteuert durch den Druck des in die Strahldüse 2 einströmenden Fluids (Waschflüssigkeit). Nach Abschalten des Hochdrucks (durch Abschalten des Hochdruckgerätes oder durch Umstellung auf Schaumstellung) wird der Kolben 14 durch die Rückstellkraft des Rückstellelements 15 wieder in die hintere Stellung, also die Niederdruckstellung, zurückgeschoben.

Aufgrund der Kopplung der Ventilfunktion des Ventils 4 an den Umschaltmechanismus der Strahldüse 2 erfolgt gleichzeitig mit der Umstellung der Strahldüse 2 von ihrer Niederdruckin ihre Hochdruckstellung auch ein Verschließen des Lufteinlasses 3, indem das Ventil 4 selbsttätig (also ohne manuelle Betätigung) geschlossen wird. Dies geschieht einerseits durch die Rückstellkraft der Ventilfeder 9, welche den Verschlusskörper 8 gegen die Dichtung 10 am Lufteinlass 3 drückt und so den Lufteinlass 3 luftdicht verschließt. Darüber hinaus wird die Rückstellkraft der Ventilfeder 9 in der Hochdruckstellung noch erhöht, weil sich in dem Strahlkanal 7 ein Staudruck ausbildet, der den Verschlusskörper 8 mit einer zusätzlichen Kraft gegen die Ventildichtung 10 presst.

In der Niederdruckstellung hingegen bildet sich im Strahlkanal 7 kein Staudruck aus, weil der durch den Strahlkanal 7 in die Strahldüse 2 strömende Schaum dort ungehindert durch den Ringkanal 16 und aus der großen Düsenaustrittsöffnung 12 ausströmen kann. Über die als Venturidüse 5 ausgebildete Drosseldüse bildet sich am eingangsseitigen Ende des Strahlrohrs 1 eine Druckdifferenz aus, welche dazu führt, dass die mit niedrigem Druck in den Strahlkanal 7 einströmende Flüssigkeit im Bereich des Auslasses 6 der Venturidüse mit hoher Geschwindigkeit strömt. Dadurch wird - wie bei einer Wasserstrahlpumpe - eine ins Zentrum des Strahlkanals 7 gerichtete Kraft auf den Verschlusskörper 8 des Ventils 4 ausgeübt, welche den Verschlusskörper 8 entgegen der Rückstellkraft der Ventilfeder 9 in Richtung der Achse des Strahlkanals 7 zieht und somit den Lufteinlass 3 öffnet. Durch den Lufteinlass 3 kann dann Luft von außen in den Strahlkanal 7 einströmen, um sich dort mit der mit Schaumbildnern versetzten Flüssigkeit zur Bildung von Schaum zu vermischen.

Mit der erfindungsgemäßen Reinigungslanze kann aufgrund des vorbeschriebenen Mechanismus sowohl der Schaumauftrag als auch die Hochdruckreinigung des Fahrzeugs erfolgen, ohne dass an der Reinigungslanze manuell eine Umstellung notwendig wäre. Der Wechsel von der Schaumstellung in die Hochdruckstellung erfolgt allein dadurch, dass der Benutzer am Hochdruckgerät das Waschprogramm "Schaumauftrag" bzw. "Hochdruckwäsche" wählt. Die Strahldüse 2 und das Ventil 4 werden dann selbsttätig entsprechend dem gewählten Waschprogramm in die richtige Stellung eingestellt.

## Patentansprüche

1. Reinigungslanze mit einem Strahlrohr (1), an dessen auslassseitigem Ende eine Strahldüse (2) angeordnet ist, welche über einen Umschaltmechanismus zwischen einer Hochdruckstellung und einer Niederdruckstellung umschaltbar ist, **dadurch gekennzeichnet, dass** das Strahlrohr (1) einen Lufteinlass (3) aufweist, der mit einem Ventil (4) verschließbar ist, wobei die Ventilfunktion so an den Umschaltmechanismus der Strahldüse (2) gekoppelt ist, dass das Ventil (4) den Lufteinlass (3) verschließt, wenn die Strahldüse (2) von ihrer Niederdruckstellung in ihre Hochdruckstellung umschaltet.

2. Reinigungslanze nach Anspruch 1, **dadurch gekennzeichnet, dass** der Umschaltmechanismus die Strahldüse (2) selbsttätig von ihrer Niederdruckstellung in ihre Hochdruckstellung umschaltet, sobald das Strahlrohr (1) mit einem Fluidstrahl beaufschlagt wird, dessen Druck einen vorgegebenen Grenzwert überschreitet.

3. Reinigungslanze nach Anspruch 1 oder 2, **dadurch gekennzeichnet, dass** der Umschaltmechanismus die Strahldüse (2) selbsttätig von ihrer Hochdruckstellung in ihre Niederdruckstellung umschaltet, sobald der Druck des in das Strahlrohr (1) strömenden Fluidstrahls einen vorgegebenen Grenzwert unterschreitet.

4. Reinigungslanze nach einem der voranstehenden Ansprüche, **dadurch gekennzeichnet, dass** an dem einlassseitigen Ende des Strahlrohrs (1) eine Venturidüse (5) angeordnet ist, über der eine Druckdifferenz des in das Strahlrohr (1) einströmenden Fluids herrscht, wenn sich die Strahldüse (2) in ihrer Niederdruckstellung befindet.

5. Reinigungslanze nach Anspruch 4, **dadurch gekennzeichnet, dass** der Lufteinlass (3) etwa im Bereich des Auslasses (6) der Venturidüse (5) in den von dem Strahlrohr (1) begrenzten Strahlkanal (7) mündet.

6. Reinigungslanze nach einem der voranstehenden Ansprüche, **dadurch gekennzeichnet, dass** das Ventil (4) als Rückschlagventil mit einem Verschlusskörper (8) ausgebildet ist, der in der Hochdruckstellung durch eine Rückstellkraft in den Lufteinlass (3) gepresst wird, um diesen zu verschließen.

7. Reinigungslanze nach Anspruch 6, **dadurch gekennzeichnet, dass** der Verschlusskörper (8) eine Kugel ist und dass die Rückstellkraft von einer Feder (9) erzeugt wird, welche die Kugel in eine mit einer Dichtung (10) abgedichteten und den Lufteinlass (3) bildende Öffnung presst, wenn die Strahldüse (2) in ihrer Hochdruckstellung ist.

8. Reinigungslanze nach einem der voranstehenden Ansprüche, **dadurch gekennzeichnet, dass** die Strahldüse (2) ein Düsengehäuse (11) mit einer stirnseitigen Düsenaustrittsöffnung (12) umfasst, in dem eine Hochdruckdüse (13) und ein längs der Strömungsrichtung zwischen einer Hochdruck- und einer Niederdruckstellung verschiebbarer Kolben (14) angeordnet sind, wobei der Kolben (14) bei Beaufschlagung der Strahldüse (2) mit Hochdruck von dem durch das einströmende Fluid erzeugten Druck in die Hochdruckstellung gedrückt wird, in welcher das einströmende Fluid durch die Hochdruckdüse (13) geleitet wird.

9. Reinigungslanze nach Anspruch 8, **dadurch gekennzeichnet, dass** in dem Düsengehäuse (11) ein Rückstellelement (15) angeordnet ist, welches den Kolben (14) von der Hochdruck- in die Niederdruckstellung bewegt, sobald der durch das einströmende Fluid erzeugte Druck unter einen vorgegebenen Grenzwert abfällt.

10. Reinigungslanze nach Anspruch 8, **dadurch gekennzeichnet, dass** das einströmende Fluid in der Niederdruckstellung durch einen zwischen der Außenseite des Kolbens (14) und der Innenfläche des Düsengehäuses (11) gebildeten Ringkanal (16) zur Düsenaustrittsöffnung (12) strömt.

11. Reinigungslanze nach einem der voranstehenden Ansprüche, **dadurch gekennzeichnet, dass** der Lufteinlass (3) im Abstand zur Strahldüse (2) angeordnet ist, um zwischen dem Lufteinlass (3) und der Strahldüse (2) eine Mischstrecke im innern des Strahlrohrs (1) für die Durchmischung der durch den Lufteinlass (3) einströmenden Luft mit dem in dem Strahlrohr (1) strömenden Fluidstrahl zu ermöglichen.

## Claims

1. Cleaning lance with a spray pipe (1) at the outlet end of which is arranged a spray nozzle (2) which can be switched between a high-pressure position and a low-pressure position by means of a switching mechanism, **characterised in that** the spray pipe (1) exhibits an air inlet (3) which can be closed with a valve (4), the operation of the valve being coupled to the switching mechanism of the spray nozzle (2) so that the valve (4) closes the air inlet (3) when the spray nozzle (2) switches from its low-pressure position to its high-pressure position.

2. Cleaning lance according to claim 1, **characterised in that** the switching mechanism automatically switches the spray nozzle (2) from its low-pressure position to its high-pressure position as soon as the spray pipe (1) receives a jet of fluid the pressure of which exceeds a predetermined limit value.

3. Cleaning lance according to claim 1 or 2, **characterised in that** the switching mechanism automatically switches the spray nozzle (2) from its high-pressure position to its low-pressure position as soon as the pressure of the jet of fluid flowing into the spray pipe (1) falls below a predetermined limit value.

4. Cleaning lance according to one of the preceding claims, **characterised in that** arranged at the inlet end of the spray pipe (1) there is a venturi nozzle (5) through which there is a difference in the pressure of the fluid flowing into the spray pipe (1) when the spray nozzle (2) is in its low-pressure position.

5. Cleaning lance according to claim 4, **characterised in that** the air inlet (3) debouches into the spray channel (7) bounded by the spray pipe (1) roughly in the area of the outlet (6) of the venturi nozzle (5).

6. Cleaning lance according to one of the preceding claims, **characterised in that** the valve (4) is embodied as a non-return valve with a closing member (8) which in the high-pressure position is pressed in to the air inlet (3) by a return force in order to close it.

7. Cleaning lance according to claim 6, **characterised in that** the closing member (8) is a ball and **in that** the return force is generated by a spring (9) which presses the ball into an opening sealed with a seal (10) and forming the air inlet (3) when the spray nozzle (2) is in its high-pressure position.

8. Cleaning lance according to one of the preceding claims, **characterised in that** the spray nozzle (2) comprises a nozzle housing (11) with an end nozzle outlet opening (12) in which are arranged a high-pressure nozzle (13) and a piston (14) which can be displaced in the longitudinal direction of flow between a high-pressure position and a low-pressure position, the piston (14) being pressed into the high-pressure position in which the inflowing fluid is passed through the high-pressure nozzle (13) when the spray nozzle (2) is exposed to high pressure through the pressure produced by the inflowing fluid.

9. Cleaning lance according to claim 8, **characterised in that** arranged in the nozzle housing (11) there is a return element (15) which moves the piston (14) from the high-pressure position to the low-pressure position as soon as the pressure generated by the inflowing fluid falls below a predetermined limit value.

10. Cleaning lance according to claim 8, **characterised in that** in the low-pressure position the inflowing fluid flows through an annular channel (16) formed between the outside of the piston (14) and the inside surface of the nozzle housing (11) to the nozzle outlet opening (12).

11. Cleaning lance according to one of the preceding claims, **characterised in that** the air inlet (3) is arranged a distance from the spray nozzle (2) in order to create a mixing section in the interior of the spray pipe (1) between the air inlet (3) and the spray nozzle (2) for the air flowing in through the air inlet (3) to be mixed with the jet of fluid flowing in the spray pipe (1).

## Revendications

1. Lance de nettoyage pourvue d'une lance (1), à l'extrémité côté sortie de laquelle est disposé un gicleur (2), lequel peut être commuté, au moyen d'un mécanisme de commutation, en une position de haute pression et en une position de basse pression, **caractérisée en ce que** la lance (1) présente une entrée d'air (3) qui peut être fermée avec une soupape (4), la fonction de la soupape étant couplée au mécanisme de commutation du gicleur (2), de telle sorte que la soupape (4) ferme l'entrée d'air (3) lorsque le gicleur (2) est commuté de sa position de basse pression à sa position de haute pression.

2. Lance de nettoyage selon la revendication 1, **caractérisée en ce que** le mécanisme de commutation commute le gicleur (2) automatiquement de sa position de basse pression dans sa position de haute pression, dès que la lance (1) est alimentée avec un jet de fluide dont la pression dépasse une valeur limite fixée.

3. Lance de nettoyage selon la revendication 1 ou 2, **caractérisée en ce que** le mécanisme de commutation commute le gicleur (2) automatiquement de sa position de haute pression dans sa position de basse pression, dès que la pression du jet de fluide coulant dans la lance (1) est inférieure à une valeur limite fixée.

4. Lance de nettoyage selon l'une quelconque des revendications précédentes, **caractérisée en ce que**, à l'extrémité côté entrée de la lance (1), est disposé un tube de Venturi (5), au travers duquel règne une différence de pression du fluide entrant dans la lance (1), lorsque le gicleur (2) se trouve dans sa position de basse pression.

5. Lance de nettoyage selon la revendication 4, **caractérisée en ce que** l'entrée d'air (3) aboutit dans le canal du jet (7) délimité par la lance (1) quasi dans la zone de sortie (6) du tube de Venturi (5).

6. Lance de nettoyage selon l'une quelconque des revendications précédentes, **caractérisée en ce que** la soupape (4) est conçue comme une soupape de non-retour avec un élément de fermeture (8) qui, dans la position de haute pression, est comprimé, au moyen d'une force de rappel, dans l'entrée d'air (3), afin de fermer celle-ci.

7. Lance de nettoyage selon la revendication 6, **caractérisée en ce que** l'élément de fermeture (8) est une sphère et **en ce que** la force de rappel est produite par un ressort (9) qui comprime la sphère dans une ouverture étanchée par un joint (10) et formant l'entrée d'air (3), lorsque le gicleur (2) est dans sa position de haute pression.

8. Lance de nettoyage selon l'une quelconque des revendications précédentes, **caractérisée en ce que** le gicleur (2) comprend un boîtier de gicleur (11) avec, du côté frontal, une ouverture de sortie de gicleur (12), dans lequel sont disposés un gicleur haute pression (13) et un piston (14) mobile dans la direction de l'écoulement entre une position de haute pression et une position de basse pression, le piston (14) étant enfoncé, lors de la mise du gicleur (2) sous haute pression, par la pression engendrée par le fluide entrant, dans la position de haute pression, dans laquelle le fluide entrant est conduit au travers du gicleur haute pression (13).

9. Lance de nettoyage selon la revendication 8, **caractérisée en ce que**, dans le boîtier de gicleur (11) est disposé un élément de rappel (15) qui déplace le piston (14) de la position de haute pression dans la position de basse pression, dès que la pression engendrée par le fluide entrant chute en dessous d'une valeur limite fixée.

10. Lance de nettoyage selon la revendication 8, **caractérisée en ce que**, dans la position de basse pression, le fluide entrant coule au travers d'un canal annulaire (16) formé entre le côté externe du piston (14) et la surface interne du boîtier de gicleur (11) jusqu'à l'ouverture de sortie de gicleur (12).

11. Lance de nettoyage selon l'une quelconque des revendications précédentes, **caractérisée en ce que** l'entrée d'air (3) est disposée à une certaine distance du gicleur (2) pour permettre, entre l'entrée d'air (3) et le gicleur (2), un parcours de mélange à l'intérieur de la lance (1) pour le brassage de l'air entrant par l'entrée d'air (3) avec le jet de fluide coulant dans la lance (1).
